(19) **Europäisches Patentamt / European Patent Office / Office européen des brevets**

(11) **EP 1 943 843 B1**

(12) **EUROPEAN PATENT SPECIFICATION**

(45) Date of publication and mention
of the grant of the patent:
**16.05.2012 Bulletin 2012/20**

(51) Int Cl.:
**H04Q 3/00** (2006.01)   **H04M 3/42** (2006.01)

(21) Application number: **06809797.1**

(22) Date of filing: **26.10.2006**

(86) International application number:
**PCT/IL2006/001236**

(87) International publication number:
**WO 2007/052254 (10.05.2007 Gazette 2007/19)**

(54) **ACCESS SYSTEM FOR THE PROVISIONING OF DIFFERENT COMMUNICATION SERVICES, AND METHOD FOR USING SAME**

ZUGANGSSYSTEM ZUR BEREITSTELLUNG VERSCHIEDENER KOMMUNIKATIONSDIENSTE UND VERFAHREN ZU SEINER BENUTZUNG

SYSTÈME D'ACCÈS POUR ACCÉDER À DIFFÉRENTS SERVICES DE COMMUNICATION ET PROCÉDÉ POUR UTILISER CELUI-CI

(84) Designated Contracting States:
**AT BE BG CH CY CZ DE DK EE ES FI FR GB GR HU IE IS IT LI LT LU LV MC NL PL PT RO SE SI SK TR**

(30) Priority: **01.11.2005 IL 17172205**

(43) Date of publication of application:
**16.07.2008 Bulletin 2008/29**

(73) Proprietor: **ECI Telecom Ltd.**
**49517 Petach Tikva (IL)**

(72) Inventor: **SOURANI, Sason**
**45267 Hod Hasharon (IL)**

(74) Representative: **Modiano, Micaela Nadia et al**
**Modiano Josif Pisanty & Staub Ltd**
**Thierschstrasse 11**
**80538 München (DE)**

(56) References cited:
**WO-A-02/073889    US-A- 5 270 701**
**US-A- 5 287 537**

## Description

### FIELD OF THE INVENTION

The present invention generally relates to access telecommunication systems, and more particularly to access communications systems that provide different services to different customers.

### BACKGROUND OF THE INVENTION

Access infrastructure deployment is very costly and involves manual work. This is the main reason for the prosperity of the xDSL - otherwise point-to-point fibers would have been replacing all point-to-point copper connections.
Wherever infrastructure exists, provisioning looks very simple. Usually customer's cables are connected to a large frame. The equipment's terminations (xDSL's, POTS) are connected to a different frame separated about one meter from the customer's frame. The act of provisioning is simply manual connection of a pair of twisted cable between a specific customer and a specific equipment termination.
This is typically true for the traditional CO's. However, as already mentioned, it will be very uneconomical to do so at the remote terminal.
In the last years several technologies for automatic provisioning emerged. One of the two dominant types of automatic provisioning, is based upon a robotic arm that inserts (or extracts) pins from a matrix board, while the second involves MEMS (Micro Electro-Mechanical Systems) technology.
The two types of automatic provisioning are somewhat limited in reliability and temperature range. A new technology with high reliability, yet associated with modest cost per customer is needed for automatic provisioning at the remote terminal.
A remote terminal should be capable of providing multi-service operation for a variety of needs (ADSL, ADSL2, VDSL, VDSL2, SDSL, SHDSL, POTS, various video services, etc.) The remote terminal should preferably be flexible enough to be upgraded with new technologies that have not yet matured (such as DSM, etc.)
At the central office on the other hand, such changes may present extreme problems to be dealt with, as it must be adapted to the specific neighborhood profiles, while allowing modularity and growth according to the users' needs, all without having to install excess equipment. On top of the above, all these needs should be implemented without incurring a substantial increase of the cost per customer.
WO 02/073889 discloses an emergent network that is autonomous at the service level. The network nodes have policies that enable them to process different types of service requests, and can pass some or all of their policies to other nodes using evolutionary biology of bacteria as a model. The network is arrange into clusters of nodes, with unprocessed service requests being passed from cluster to cluster.
The present invention seeks to provide a solution to these problems.

### SUMMARY OF THE INVENTION

The present invention seeks to provide a novel solution for extending services provisioned in an access network.
Another object of the invention is to provide a device for allowing fast connection of new subscribers to an access communication network.
Yet another object of the present invention is to provide an efficient way to manage different entities associated with the above objects.
Further objects and features of the invention will become apparent to those skilled in the art from the following description and the accompanying drawings.
According to a first embodiment of the invention there is provided an access communication system comprising:
a first plurality of communication devices, each operative to communicate with a subscriber out of a second plurality of subscribers associated with the access communication system;
at least one aggregation device comprising at least one switching matrix connected to a third plurality of communication devices selected out of the first plurality of communication devices and to a forth plurality of subscribers selected from among the second plurality of subscribers, and when a new subscriber is to be connected through the at least one aggregation device, the at least one switching matrix is operative to enable provisioning of the required service to the new subscriber either by using one of the third plurality of communication devices, or by communicating with a communication device installed at a different location and is operative to enable the provisioning of the service required by the new subscriber; and
wherein the access communication system is further characterized in that the number of the second plurality of subscribers is greater than the number of the first plurality of communication devices.
In accordance with a preferred embodiment of the invention, the aggregation device is selected from among the group consisting of an MSAG, a DSLAM, a communication shelf located in a street cabinet, a communication shelf located at the central office and the like.

As will be appreciated by those skilled in the art, the present invention the present invention should be understood to encompass the embodiment wherein the number of communication devices included in the third plurality of communication devices is equal to the number of communication devices included in the first plurality of communication devices and/or the number of subscribers included in the forth plurality of subscribers is equal to the number of subscribers included in the second plurality of subscribers.

The aggregation device, which can be a Multi-Service Access Gateway (to be referred to herein as "MSAG"), is preferably capable of conveying traffic to the subscribers' appropriate terminals in order to provide them with any current type of service provided today along the twisted-pair copper access network, and presumably with all future services that will also be provided by the same MSAG. It should be understood that the term MSAG as used herein, encompasses also a communication device with is operative to provide a single type of service to a plurality of subscribers (e.g. that functions as a DSLAM).

Preferably, the MSAG is located at a street cabinet and a communication device which is installed at a different location, is installed at a nearby street cabinet.

According to another preferred embodiment of the present invention, each of the services provided by the access communication network is associated with a pre-defined characterizing distance. Each of the subscribers may either be connected through the same aggregation device for the provisioning of the services required or through a second aggregation device, as long as the distance extending between each of the subscribers and the respective communication device, whether installed in the first aggregation device or in the second aggregation device, is less than the corresponding pre-defined characterizing distance.

In accordance with yet another preferred embodiment of the invention, the at least one aggregation device and each of the third plurality of communication devices are managed by one management system.

Preferably, the management system comprises a single local managing entity operative to manage the at least one aggregation device and each of the third plurality of communication devices.

According to another preferred embodiment of the invention, the street cabinet or the central office, as the case may be, further comprises an automated switching matrix operative to associate a subscriber with an available communication device (e.g. a modem adapted to provide the required service). Such automated matrix ("automated MDF") is preferably an Electro-Mechanical apparatus operative to connect subscribers to any specific type of service out of several groups of services.

The integration of the MSAG and the automated MDF is such that it optimizes the operation flexibility versus the overall costs associated with the installation and upgrade of the access network.

According to another aspect of the invention there is provided a communication aggregation device adapted to operate in an access communication network and comprising:

at least one interface operative to allow communication with a plurality of subscribers;
a plurality of communication devices operative to simultaneously provide required services to less than all of the plurality of subscribers;
means operative to determine in case that a new subscriber is to be connected through the communication aggregation device, whether the service required for that new subscriber will be provided by using one of the plurality of communication devices or by a communication device installed at a different location;
at least one switching matrix operative to associate a subscriber with an available communication device, and in case of a new subscriber, operative to allow the provisioning of the required service in accordance with the determination made by the determination means.

According to still another preferred embodiment of this aspect of the invention, the communication aggregation device further comprises:

means operative to determine an available communication device through which the service required for the new subscriber can be provided, from among the plurality of communication devices comprised in that communication aggregation device;
processor operative to establish a maximum distance associated with the service required for the new subscriber;
means operative to determine availability of a communication device adapted to provide the service required for the new subscriber, wherein this latter communication device is associated with a second communication aggregation device located within the maximum distance from the new subscriber.

By still another preferred embodiment, each of the communication devices of the communication aggregation device is a modem operative at a rate compatible for providing a service required by a subscriber to whom the modem is being connected.

Preferably, the at least one switching matrix is an automated switching matrix. More preferably, the plurality of communication devices and the at least one switching matrix are managed by a single managing entity.

According to yet another aspect of the invention, a method for associating a street cabinet to an access network is provided. The method comprises:

(i) providing an input interface connected to a plurality of subscribers and an output interface connected to an exchange side and/or to other street cabinet(s);

(ii) enabling the establishment of a maximum distance for each type of services required by each of the plurality of subscribers;

(iii) selecting available communication devices suitable to provide required services to subscribers that cannot be provided with such required services by any communication device installed in that street cabinet, wherein the selection is done by using a criterion that the selected communication devices are each located within the maximum distance established from the respective subscribers to whom the required services should be provided;

(iv) enabling communications between subscribers which are not provided with required services by the communication devices comprised in that street cabinet, and the selected communication devices.

It should be understood that the term subscriber as used herein and throughout the specification, is used to denote a combination comprising a customer and a service of a certain type. In other words, a single customer that is provided with two different types of services would be considered as two subscribers out of the second plurality of subscribers.

## BRIEF DESCRIPTION OF THE DRAWINGS

The present invention will be understood and appreciated more fully from the following detailed description, taken in conjunction with the drawings in which:

Fig. 1 is a schematic illustration of a communication rack switching matrix for hosting a plurality of connection (customer/service) pairs;

Fig. 2 presents a simplified multi-layered automated MDF constructed in accordance with an embodiment of the present invention;

Fig. 3 demonstrates a simplified example of an MSAG (Multi Service Aggregated Gateway) and an automated MDF;

Fig. 4 demonstrates a section of automated MDF that is devoted to handle overflow situation;

Fig. 5 illustrates an example of a "daisy chain" overflow topology in accordance with the present invention;

Fig. 6 shows a possible topology in accordance with an embodiment of the present invention, for interconnecting several street cabinets;

Fig. 7 shows an example of an area comprising 3 street cabinets, each servicing 400 customers and located 300m apart of each other;

Fig. 8 illustrates an example of a system comprising modular, automated MDF building blocks;

Fig. 9 demonstrates a modularity achieved by using multi-systems topology in accordance with an embodiment of the present invention;

Figs. 10A and 10B illustrate a system comprising class A building blocks, whereas Fig. 10C and 10D illustrate a system comprising class B building blocks;

Fig. 11 demonstrates an example of a scalability effect that can be achieved while constrcuting a network in accordance with the prsent invention;

Fig. 12 examplifies one part of a network comrising a street cabinet, and two adjacent street cabinets thereto, 24 external input/output lines extending therebetween and one additional pair used of communications exchanged locally;

Fig. 13 illustrates an example for an arrangement adapted to measure the D.C voltage drop between two adjacent street cabinets used in evaluating the distance therebetween;

Fig. 14 illustrates a possible connectivity horizon associated with a street cabinet for three types of services;

Fig. 15 demonstrates the scalability that may be achieved when each system stores only limited number of connections and transact this limited number to its neighbors;

Fig. 16 presents a flow chart for constructing information table that can be used in determining how would the customers connected to a street cabinet, be provided with the required services;

Fig. 17 illustrates the provisioning of services according to an embodiment of the present invention through the use of a street cabinet that is to be installed where no street cabinet has been installed before; and

Fig. 18 illustrates the provisioning of services according to an embodiment of the present invention through the use of a street cabinet that has already been installed.

## DETAILED DESCRIPTION OF PREFERRED EMBODIMENTS

The underlying principle as demonstrated in the Examples described hereinafter is to minimize the number of switching components needed for the provisioning of any type of service to any customer, out of several pre-defined types of services. In order to meet new needs, different types of components are preferably used, and it will be beneficial to optimize the switching components installed to these new needs. In many cases cost optimization is not achieved by reducing the number of cross-connects, but by reducing the number of rows and columns needed in a switching matrix that is used.

Assuming that one 'row' in the switching matrix is assigned to each customer, with a total of N rows for N customers, and to every service device one 'column' is assigned, with a total of M columns for M service devices. The minimum number of rows and columns will be therefore N+M. This value will be used as a reference in the following description.

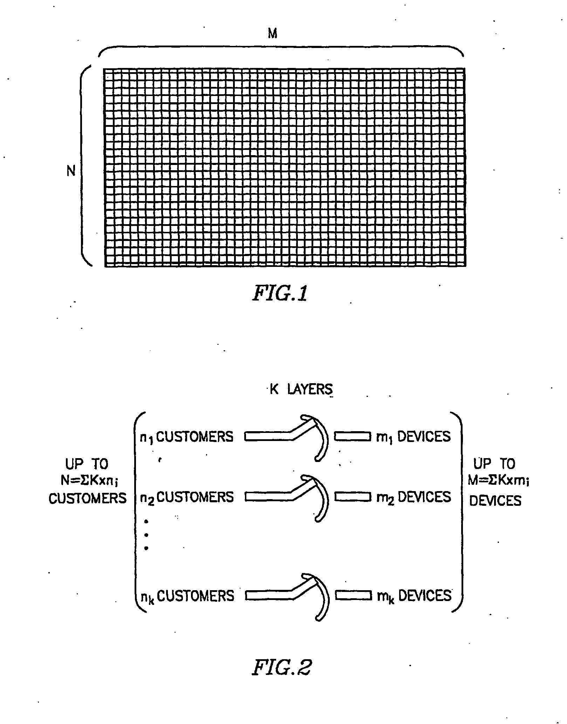

Typically, in conventional electro-mechanical systems, each pair of connections (customer/service) needs approximately an area of 5mm x 5mm in the switching matrix so that for a 19" rack, the number of possible contacts is in the range of 50-100 pairs. A possible structure accommodating such connections is illustrated in Fig. 1, where M, the number of columns for the device pairs is approximately 68-75, and N, the number of customers to be serviced is approximately 30-60 pairs. This is one "layer" of an automated MDF referred to in the present example. By more modern approaches, the above-described electromechanical arrangement may be replaced with MEMS (micro electro mechanical system) arrangement, to obtain much higher densities than that of the previously described arrangement.

A presentation of a simplified multi-layered automated MDF constructed in accordance with an embodiment of the present invention is shown in Fig. 2, where the automated MDF shown, is assembled in layers. The number of layers is such that the overall rows would match the number of customers. As an example, if one layer has 50 pairs of connections to customers and 75 pairs of connections to devices and if the street cabinet should serve 365 customers, 8 layers of automated MDF will be used. These 8 layers will cover 400 customers and up to 600 devices. Due to the modularity of the system, it is easy to tailor these building blocks to the exact needs of the network provider, and to change them accordingly when required.

It should be clear that no direct connection is needed between any customer's pair and any of the devices' pairs. More complex connections to resolve this limitation and statistical considerations are exemplified hereinafter.

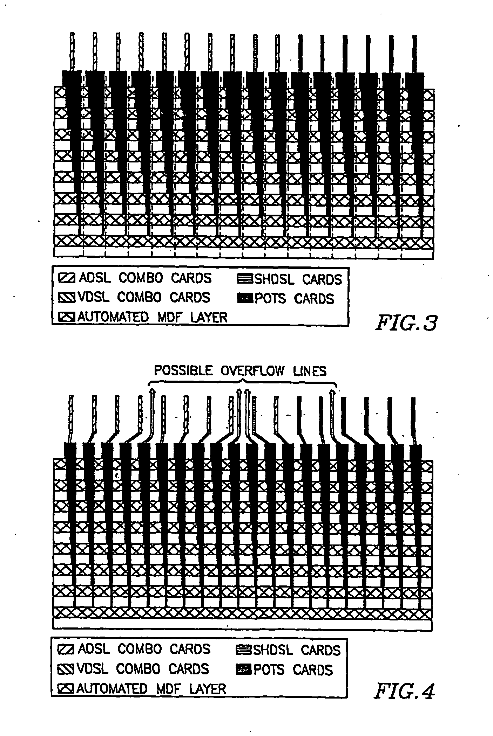

Let us now consider a very simplified example, in which we assume a common motherboard for both, the MSAG and the automated MDF. In Fig. 3 a common motherboard (which in fact does not have to be an integral part of a device in accordance with the present invention) is presented for illustration purposes only. The 15 (or 16) slots of the 19" MSAG shelf are connected vertically with a corresponding slice of the automated MDF (Fig. 3).

Next, Fig. 4 demonstrates a somewhat more practical solution. In this Fig., a section of the automatic MDF is devoted to handle overflow situation. Handling the overflow situation is required for optimizing the number of cards in the system. Since by.the former approach, there is no connection between customers of one layer and devices belonging to a different layer, one would be required to install a large number of devices per layer to achieve high probability of availability than in the case where any customer can be connected to any device at any layer. This limitation is practically solved by the advent of overflow. As will be shown hereinafter, proper handling of overflow situation may be found crucial for successful operation of the systems.

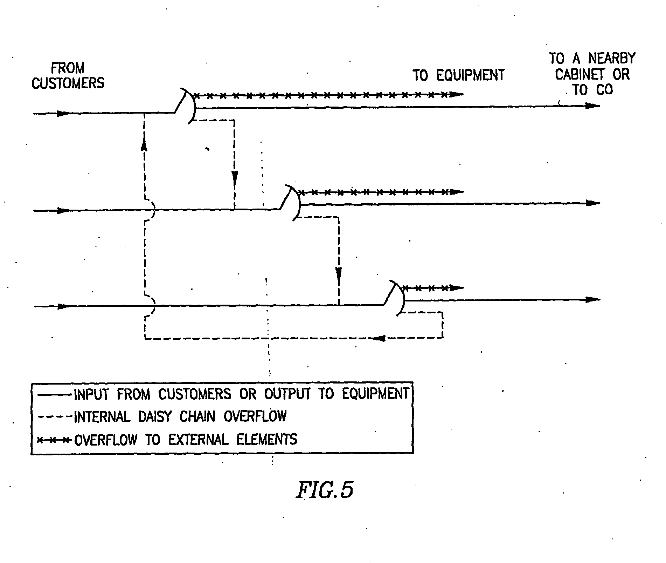

The topology for handling cases of overflow may differ according to the specific needs of the Network Provider and/or the specific needs of the neighborhood. One possible solution is to route a section of the overflow lines directly to the central office. This solution may preferably be used for cases where a point-to-point galvanic connection is needed. For instance - connection to a different provider, usually a CLEC. Alternatively, for cases where several types of modems are implemented only in a centralized configuration (for example - if SHDSL gains only very low penetration, it might be that the provider would prefer installing a single card at the CO's DSLAM, over installation of several cards in the street cabinet(s). Other overflow lines could be internally connected to other layers in the same shelf, or could be externally connected to other shelves nearby (at the same place or at a nearby street). Fig. 5 presents an example of a "daisy chain" overflow topology.

Implementing "overflow" topology, would make it possible to route communications to/from any customer to the CO, or to another nearby shelf with the desired type of device. A rarely used device could be installed for example once every two street cabinets (or perhaps every 3 or 4 street cabinets, etc.) and not in every cabinet. Other possible examples for using "overflow" topology are:

- testing the customer's line;
- line card backup.

In case of a failure, it is possible to temporarily route all customers to reserved modems in all nearby street cabinets.

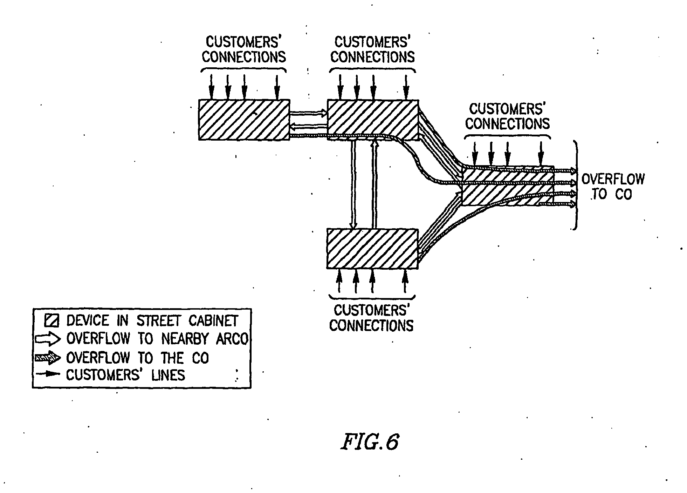

Fig. 6 shows a possible topology allowing interconnection of several street cabinets. For simplicity, the internal overflow at the same shelf is not presented in this Fig.

As may be seen, overflow traffic can be directed upward (towards the CO) or downward, e.g. to a more remote street cabinet. Also, two shelves can backup each other as an "island", or can be part of a larger backup network. Since the operation of ADSL is less sensitive to the distance factor than VDSL, it is preferred to use sufficient VDSL modems to minimize VDSL overflow, while ADSL and many other terminations (including POTS) can be shared by means of overflow handling much more freely.

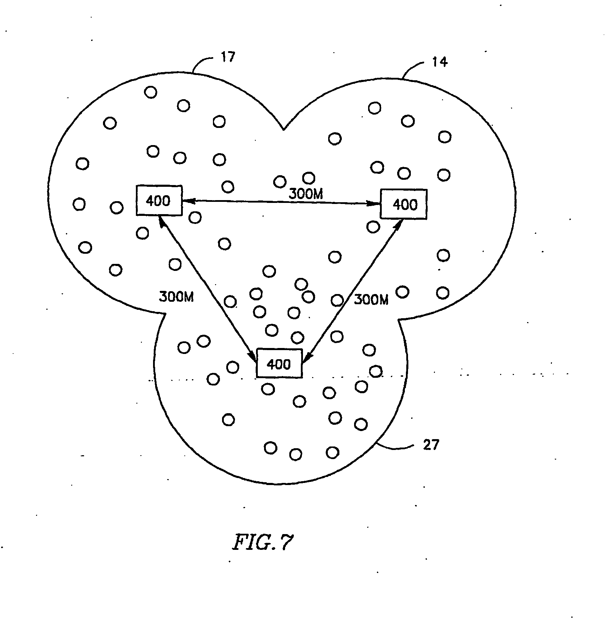

Let us now consider a simple example of an area comprising 3 street cabinets, each servicing 400 customers. For the sake of simplicity let us also assume that these cabinets are located 300m apart of each other as demonstrated in Fig. 7. For 5% penetration rate and required availability of 99%, each cabinet would need 11 reserved units out of the nominal 20 units (= 5% x 400). Capital Expenses ("CAPEX") is increased by over 50%. But when applying the method provided by the present invention of sharing resources, one may note that in order to service the 1200 customers, only 18 reserved units are needed on top of 60 units required (= 5% x 1200). Thus, the overall number of excess units required for providing a solution in accordance the conventional methods of the prior art is 33 units, whereas in accordance with the present invention, only 18 excess units are needed.

Typically, the modems associated with the services to be provided, are installed on a card. If 24 modems are located at each card, it is possible to install one card in every two out of the three systems illustrated in Fig. 7 and two cards in the third system. If a conventional method of "no sharing" is applied, 2 cards are needed for each system. Thus, instead of 6 cards that would be required in such a conventional system, the service provider applying the method of the present invention can use only 4 cards.

Preferably, the allocation of devices to enable proper sharing is done automatically, as will be further elaborated hereinafter.

Let us now consider an example of a system in which the basic building block of the hardware is one "layer" of "automated MDF", composed of approximately 54 customers connected to approximately 60 outputs.

The 60 outputs are further divided into 45 "internal" outputs and 15 "global" outputs (capable of participating in the resources pool). The internal outputs are further divided into 15 internal groups of 3 outputs each. The 15 global outputs are also divided similarly - 5 groups of three outputs each. A basic matrix of 48x60 is used for the basic building block of the automatic MDF. This matrix is then connected to the various equipment cards. The 60 pairs extending towards the equipment (denoted as "outputs") are divided into two groups: one group is connected directly to the cards, while the other group (the "overflow" group) is not associated with any specific (dedicated) equipment. This latter group is further divided into two subgroups: one subgroup is connected internally to other layers, in our case this group has three subgroups, the three subgroups are connected to the three next floors in a "daisy chain" type of connection. The second overflow group exiting the system to be connected to other systems at the same location or at other nearby locations. The 48 lines for conveying overflow traffic, at the input and at the output, are divided into 2 groups of 24 lines. Each group can be connected to a different system. As will be appreciated by those skilled in the art, although the above description relates to a specific architecture, many other architectures are possible as well.

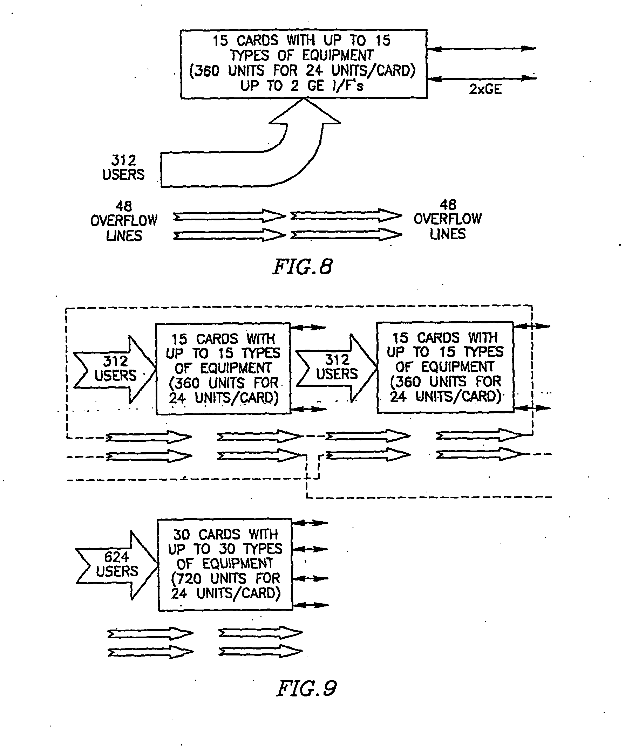

It is possible to connect many systems together in one street cabinet and to look at this ensemble of systems as one consolidated system. Fig. 9 demonstrates a modularity achieved by using multi-systems topology (the upper block is composed of two system and is similar to the lower block). As may be seen from Fig. 9, two systems connected together may be considered as one, bigger system. Similarly, the system shown in Fig. 8 can also be considered as a consolidation of 8 smaller units - the 8 layers of the automated MDF.

To further demonstrate the present invention, two configuration classes have been defined. A configuration of Class "A" comprises one "layer" of automated MDF and its associated equipment units. The configuration designated as Class "B" comprises either multiple instances of Class "A" type configurations ("Class B1"), or, multiple instances of Class B1 type of configurations ("Class B2"), provided with the appropriate connectivity information and switching algorithm.

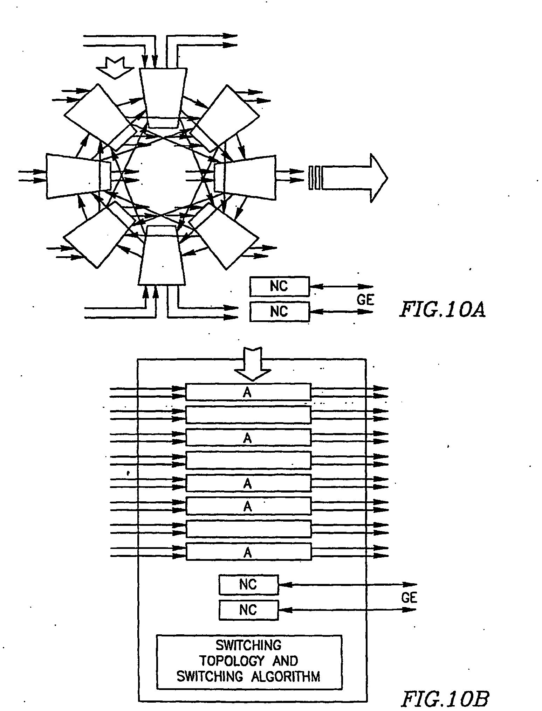

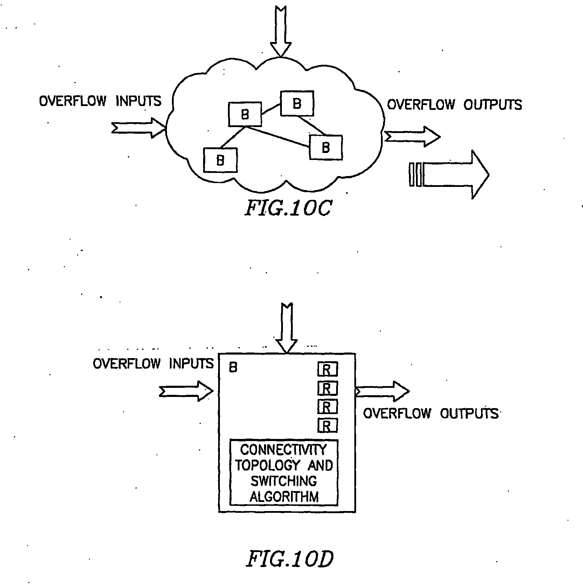

The system presented in Fig. 8 is also referred to in Figs. 10A and 10B. The system has a configuration which comprises 8 associated class A type building blocks. Similarly, the network shown in Fig. 9 is referred to in Fig. 10C and 10D, showing a configuration comprising one class B2 type building block which is composed of 2 Class B1 type building blocks, each comprising a configuration composed of eight Class A type building blocks.

The network shown in Figs. 10C and 10D is composed of 4 street cabinets. Each of the street cabinets is a building block of the type Class B1, composed of 8 building blocks of Class A. The overall network is an instance of class B2 composed of 4 instances of class B1 (the upper left street cabinet in the network shown in Figs. 10C and 10D has 3 overflows groups and not 2 as previously described in connectior with Fig. 8, therefore, the connectivity information in the specific Class A is different than that described. The building blocks are still considered to be Class A instances with different internal information, while the system itself is still a class "B" system with the specific class "A" instances.

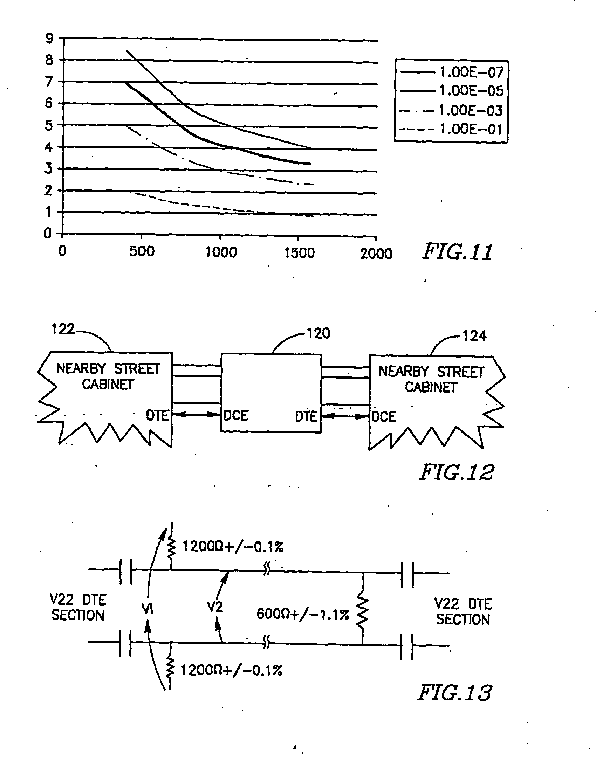

The overflow inputs and outputs are not necessarily increased for large networks. As a matter of fact, large networks may be confined to themselves without the need to get, or provide backup from/to other external systems, which is consistent with the law of large numbers. Thus, for 400 customers, the amount of excess equipment needed to achieve specific availability is over twice as much as would be needed for 1600 customers. An autonomus network ('autonomus' in the sense that it is confined by itself) of 4 systems of 400 customers each, needs only half of the excess equipment when compared to 4 autonomus systems of 400 customers each. Fig. 11 demonstrates the scalability effect when allowing different blocking probabilities. In this figure, y axis shows the excess of equipment (in percentage) used for achieving a specific availability failure and being a function of the number of customers (x axis). The penetration value for this graph is assumed to be 10%.

In order to improve the scalability of the networks constructed in accordance with the present invention, one would prefer to limit the amount of information required for operating each system, but naturally without having an adverse effect upon the system performance. According to an embodiment of the present invention, this limitation is achieved by restricting the connectivity horizon, which will be further explained, provided to each one of the systems. In addition, local communications and local distance measuring H/W, is operative free of central management, thus eliminating the need to provide to such central management tedious configuration information. The systems preferably recognize each other automatically while also detecting the distance extending between each other. Each such system will automatically detect the cards associated therewith, so that in practice, the only information needed to be provided are the linkage between customer's lines and type of service required for the specific customer.

In the example illustrated in Fig. 8, there are two groups, each of 24 external "output" lines, and two groups, each of 24 external "input" lines, and each such group can be routed to a different system. In the example illustrated in Fig. 12, street cabinet 120 has two adjacent street cabinets 122 and 124 that are connected to cabinet 120 via the 24 input/output line pairs. Furthermore, in order to eliminate the need for tedious configuration, the systems automatically detect the presence of each other and register possible connectivity features. The detection is done through the use of local communications exchanged between the two systems. For this purpose an additional twisted pair, the 25th, may be used, that extends between these street cabinets. This 25th pair may either by a pair dedicated for such local communications, or a pair which may carry other communications, apart from those required for the local communications referred to above.

Let us consider for the sake of simplifying the examples provided, that V22 modems are used for the communications. The term "outputs" as referred to in the example will be the 'DTE' section of the modem while the term "inputs" of the example will refer to the 'DCE' section of the modem, as may be seen in Fig. 12.

Measuring the D.C voltage drop over the 25th twisted pair, referred to hereinabove as a pair preferably reserved for local communications to be carried between the two systems, could yield, indirectly yet accurately, the distance between the systems. A schematic diagram illustrating this concept is given in Fig. 13, where the distance between the two systems can be determined based on the measured values of V1 and V2, from example by using the following relationship for the wiring resistance:

$$r = \frac{3000V_2 - 600V_1}{V_1 - V_2}$$

Preferably, the same pair may also be used for local communications to be carried between these two systems.

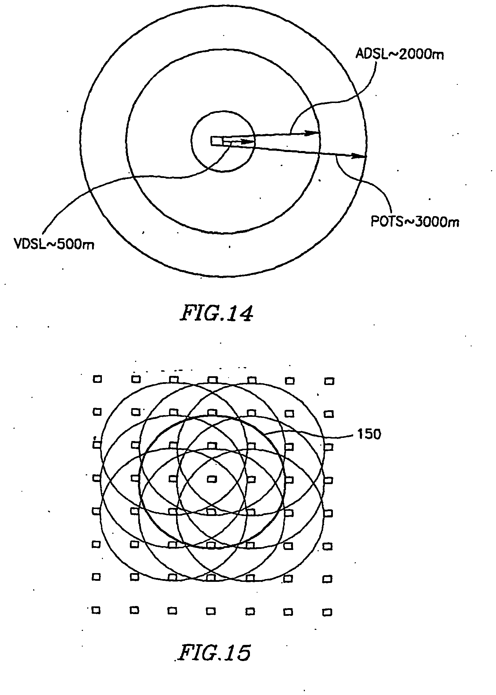

Limiting the amount of information required for the operation of each system as provided by an embodiment of the invention, enables the system as a whole to remain scalable. Let us consider once again a case where V22 modem is used for local communications together with measuring the distance, and assuming that the necessary information and the necessary communications needed for connectivity transactions, are provided, in order for the street cabinet to construct its own connectivity horizon as shown in Fig. 14, where each service is associated with a corresponding horizon distance.

In such a case, each system receives the connectivity information from all nearby systems, while any information regarding systems located over the horizon distance will be discarded by or not communicated to that system. Such horizon distance is for example a pre-determined value, preferably associated with a certain type of service, where each different service may be associated with a different horizon distance. For example for POTS this distance could be determined as 3000m, for ADSL 2000m, for VDSL 500m, etc.). The truncated information is stored at the CPU memory and is transferred to all adjacent neighbors, and each neighbor will truncate the information to the desired length according to its own position. The result will be a limited amount of connectivity information stored at each street cabinet, which information relates only to the nearby systems in the respective connectivity horizon radius.

Fig. 15 illustrates the scalability that may be achieved when each system stores only limited number of connections and transact only this limited number to its neighbors. All 8 systems surrounding the middle system 150 transfer the truncated information they had calculated and stored, to their neighbors. System 150 receives all the information, truncates it in accordance with its own local horizon and propagates it also to its neighbors. For clarity purposes, only one type of service is shown in Fig. 15.

Following is an example of a protocol that may be used for the transactions over the V.22 local connections.

Since the horizon of each system is preferably limited, propagation delays that might limit the protocol performance in ordinary routers, are negligible in this case, as it concerns only a limited number of systems in the vicinity of any specific system. The rate of changes in each system would typically be in a range of once a day to once a week. Such changes may easily propagate by the protocol used.

Possible information stored by each street cabinet:

```
struct Service {
       short Service_Type;
       long Service_Id_Number; }
struct System{
       long System_Id_Number;
       long System_Distance;
       struct Service Serv[N]  }
struct System Sys[M];
```

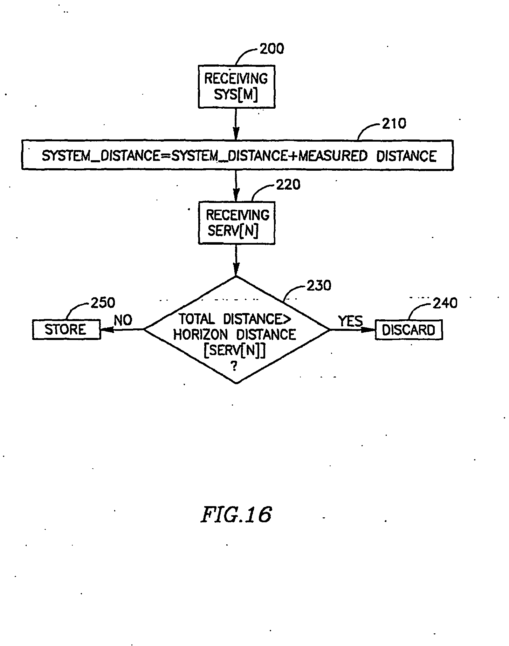

The structure named "System" may comprise the system identification number, its distance and a set of available services. Each service has its type and its identification number. The transaction sends all the information in Sys[M]. The receiver adds the distance from the transmitted unit to the overall distance, discards all services associated with distance(s) higher then the connectivity horizon and adds its own system structure (that obviously has 0 distance). The steps associated with such a method are demonstrated in Fig. 16, where the street cabinet receives the system's details such as its identification number, its distance and a set of available services (step 200), determine the distance as being equal to the distance provided within that communication plus the distance measured at that street cabinet of the distance which was traveled by the communication received (step 210), retrieves the services available in the system (step 220) and determines (step 130) whether the horizon distance is lower for any given service from the distance determined in step 210. Next, all information related to services having an horizon distance higher than the distance determined in step 210 are discarded (step 240) whereas the information related to all services associated with an horizon distance lower than the distance determined in step 110 are stored (step 250).

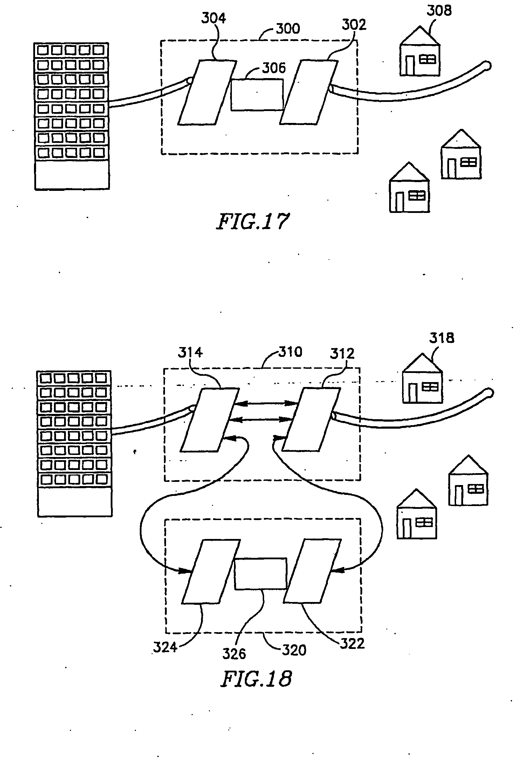

There are two typical scenarios in which the method provided by the present invention could be implemented. The first, if the street cabinet is to be installed in a green field i.e. where no street cabinet has been installed before. In which case the connection is quite simple as illustrated in Fig. 17. In this example, a device 300 constructed in accordance with the present invention is used. The device comprises an interfacing MDF 302 which is connected directly to the customer's premises 308 (the "inputs" side) and an interfacing MDF that is connected directly to the exchange side and/or to other street cabinets (the "outputs" side). All functions required for operating automatic MDF and providing VDSL services to the customers may be implemented after the installation of device 300, as traffic will be routed via routing device 306.

In case a street cabinet 310 has already been put in operation and should now be upgraded in accordance with the present invention, such an upgrade may be carried out in a way illustrated in Fig. 18.

Let us consider a case where that legacy installation 310 has already been provided with MDF devices, at the CO side and the customers' side, 314 and 312, respectively. According to this example, the legacy MDF can be maintained and the relevant lines will be rerouted through the upgrading device 320 which comprises the two corresponding MDF interfaces 322 and 324, and the routing device 326, allowing the relevant lines to be provided with all the features of automated MDF as explained above in connection with Fig. 17.

Using the Automated MDF reduces the need for technicians to visit the street cabinet whenever a new provisioning, or disconnecting of customers, is required and customers will be able to be provided with the new service in a matter of hours rather than in days.

Furthermore, according to the present invention, testing resources may be added to the arrangement provided so that lines will be routed to the testing resource whenever fault is suspected. Since the line-testing card should not be installed in all systems but only in a small fraction thereof, as all systems located at the vicinity of a system at which such a line-testing card has been installed could use this resource through the sharing feature of the present invention.

It is appreciated that various features of the invention that are, for clarity, described in the contexts of separate embodiments may also be provided in combination in a single embodiment. Conversely, various features of the invention which are, for brevity, described in the context of a single embodiment may also be provided separately or in any suitable sub-combination.

It will be appreciated by persons skilled in the art that the present invention is not limited by what has been particularly shown and described herein above. Rather the scope of the invention is defined by the claims that follow.

**Claims**

1. An access communication system comprising:

   a first plurality of communication devices, each adapted to communicate with a subscriber out of a second plurality of subscribers associated with said access communication system;
   at least one aggregation device (300) comprising at least one automated switching matrix (302) connected to a third plurality of communication devices selected out of said first plurality of communication devices and to a fourth plurality of subscribers selected from among said second plurality of subscribers, and wherein said automated switching matrix (302) comprises means for connecting a new subscriber (308) through said at least one aggregation device that enable provisioning of a required service to said new subscriber (308) either by using one of said third plurality of communication devices or by communicating with a communication device installed at a different location and operative to enable provisioning of the service required by said new subscriber (308); and
   wherein said access communication system is further **characterized in that** the number of said second plurality of subscribers is greater than the number of said first plurality of communication devices.

2. An access communication system according to claim 1, wherein said aggregation device (300) is selected from the group consisting of an MSAG, a DSLAM, a communication shelf located in a street cabinet and a communication shelf located at the central office.

3. An access communication system according to claim 2, wherein said aggregation device (300) is an MSAG located at a street cabinet and wherein said communication device installed at a different location is installed at a nearby street cabinet.

4. An access communication system according to claim 1, wherein each of the services provided by said access communication network is associated with a pre-defined characterizing distance, and each of said third plurality of subscribers may either be connected through said aggregation device (300) for the provisioning of services required by each of said third plurality of subscribers, or connected through a second aggregation device comprising a fifth plurality of communication devices, as long as the distance extending between each of said subscribers out of said third plurality of subscribers and the respective communication device, whether installed in said aggregation device (300) or in said second aggregation device, is less than the corresponding pre-defined characterizing distance.

5. An access communication system according to claim 1, wherein
   said at least one aggregation device (300) and said third plurality of communication devices is managed by one management system.

6. An access communication system according to claim 5, wherein said management system comprises a single local managing entity operative to manage said at least one aggregation device (300) and said third plurality of communication devices.

7. A communication aggregation device (300) adapted to operate in an access communication system and comprising:

   at least one interface operative to allow communication with a plurality of subscribers;
   a plurality of communication devices operative to simultaneously provide required services to less than all of said plurality of subscribers;
   means operative to determine in case that a new subscriber is to be connected through said communication aggregation device (300), whether the service required for said new subscriber will be provided by using one of said plurality of communication devices or by a communication device installed at a different location;
   at least one automated switching matrix (302) operative to associate a subscriber with an available communication device, and in case of a new subscriber (308), operative to allow the provisioning of the required service in accordance with said determination means.

8. A communication aggregation device (300) according to claim 7, further comprising:

means operative to select an available communication device through which the service required for said new subscriber can be provided, from among said plurality of communication devices comprised in said communication aggregation device (300);

processor operative to establish a maximum distance associated with the service required for said new subscriber (308);

means operative to determine availability of a communication device adapted to provide the service required for said new subscriber (308), wherein said latter communication device is associated with a second communication aggregation device located within the maximum distance from said new subscriber (308).

9. A communication aggregation device (300) according to claim 7, wherein each of said communication devices is a modem operative at a rate compatible for a providing service required by a subscriber to whom said modem is being connected.

10. A communication aggregation device (300) according to claim 7, further **characterized in that** said at least one automated switching matrix (3C2) and said plurality of communication devices " are managed by a single managing entity.

11. A method for associating a street cabinet (120) to an access communication system according to claim 1, which comprises

(i) providing an input interface connected to a plurality of subscribers and an output interface, connected to an exchange side and/or to one or more other street cabinets (122, 124);

(ii) enabling the establishment of a maximum distance for each type of services required by each of said plurality of subscribers;

(iii) selecting available communication devices suitable to provide required services to subscribers that cannot be provided with said required services by any communication device installed in said street cabinet (120), wherein the selection is done by using a criterion that each of the selected communication is each located within the maximum distance established from a respective subscriber to whom the required service should be provided;

(iv) enabling communications between subscribers which are not provided with required services by communication devices comprised in said street cabinet (120), and the selected communication devices.

**Patentansprüche**

1. Ein Zugangskommunikationssystem, das Folgendes umfasst:

eine erste Vielzahl von Kommunikationsvorrichtungen, von denen jede ausgebildet ist, um mit einem Teilnehmer aus einer zweiten Vielzahl von Teilnehmern zu kommunizieren, die mit dem Zugangskommunikationssystem verknüpft sind,

mindestens eine Aggregationsvorrichtung (300), die mindestens eine automatisierte Schaltmatrix (302) umfasst, die mit einer dritten Vielzahl von Kommunikationsvorrichtungen verbunden ist, gewählt aus der ersten Vielzahl von Kommunikationsvorrichtungen, und die mit einer vierten Vielzahl von Teilnehmern verbunden ist, gewählt aus der zweiten Vielzahl von Teilnehmern, und wobei die automatisierte Schaltmatrix (302) Mittel zur Verbindung eines neuen Teilnehmers (308) durch die mindestens eine Aggregationsvorrichtung umfasst, die die Bereitstellung eines erforderlichen Dienstes an den neuen Teilnehmer (308) ermöglichen, entweder durch Verwendung einer aus der dritten Vielzahl von Kommunikationsvorrichtungen oder durch Kommunikation mit einer Kommunikationsvorrichtung, die an einem anderen Ort installiert ist und die wirksam ist, um die Bereitstellung des Dienstes, der von dem neuen Teilnehmer (308) angefordert wird, zu ermöglichen, und

wobei das Zugangskommunikationssystem weiter **dadurch gekennzeichnet ist, dass** die Anzahl der zweiten Vielzahl von Teilnehmern größer ist als die Anzahl der ersten Vielzahl von Kommunikationsvorrichtungen.

2. Ein Zugangskommunikationssystem gemäß Anspruch 1, wobei die Aggregationsvorrichtung (300) gewählt ist aus der Gruppe bestehend aus einem MSAG, einem DSLAM, einem Kommunikations-Regal, das sich in einem Straßenschrank befindet, und einem Kommunikations-Regal, das sich in der Fernsprechvermittlungsstelle befindet.

3. Ein Zugangskommunikationssystem gemäß Anspruch 2, wobei sich die Aggregationsvorrichtung (300) ein MSAG ist, das sich in einem Straßenschrank befindet, und wobei die Kommunikationsvorrichtung, die an einem anderen Ort installiert ist, in einem Straßenschrank in der Nähe installiert ist.

4. Ein Zugangskommunikationssystem gemäß Anspruch 1, wobei jeder der Dienste, die von dem Zugangskommunikationsnetz bereitgestellt werden, mit einer vordefinierten Kennzeichnungsdistanz verknüpft ist und wobei jeder der dritten Vielzahl von Teilnehmern entweder über die Aggregationsvorrichtung (300) zur Bereitstellung von Diensten, die von jedem der dritten Vielzahl von Teilnehmern angefordert werden, angeschlossen werden kann, oder über eine zweite Aggregationsvorrichtung, die eine fünfte Vielzahl von Kommunikationsvorrichtungen umfasst, angeschlossen werden kann, vorausgesetzt, dass die Distanz, die sich zwischen jedem der Teilnehmer aus der dritten Vielzahl von Teilnehmern und der jeweiligen Kommunikationsvorrichtung erstreckt, ob in der Aggregationsvorrichtung (300) oder in der zweiten Aggregationsvorrichtung installiert, geringer ist als die entsprechende vordefinierte Kennzeichnungsdistanz.

5. Ein Zugangskommunikationssystem gemäß Anspruch 1, wobei die mindestens eine Aggregationsvorrichtung (300) und die dritte Vielzahl von Kommunikationsvorrichtungen von einem Verwaltungssystem verwaltet werden.

6. Ein Zugangskommunikationssystem gemäß Anspruch 5, wobei das Verwaltungssystem eine einzige lokale Verwaltungseinheit umfasst, die wirksam ist, um die mindestens eine Aggregationsvorrichtung (300) und die dritte Vielzahl von Kommunikationsvorrichtungen zu verwalten.

7. Eine Kommunikationsaggregationsvorrichtung (300), ausgebildet, um in einem Zugangskommunikationssystem zu arbeiten, und Folgendes umfassend:

mindestens eine Schnittstelle, die wirksam ist, um die Kommunikation mit einer Vielzahl von Teilnehmern zu ermöglichen,
eine Vielzahl von Kommunikationsvorrichtungen, die wirsam sind, um gleichzeitig weniger als allen der Vielzahl von Teilnehmern erforderliche Dienste bereitzustellen,
Mittel, die wirksam sind, um zu bestimmen, falls ein neuer Teilnehmer durch die Kommunikationsaggregationsvorrichtung (300) angeschlossen werden soll, ob der Dienst, der für den neuen Teilnehmer erforderlich ist, mit Hilfe einer aus der Vielzahl von Kommunikationsvorrichtungen oder durch eine Kommunikationsvorrichtung bereitgestellt werden soll, die an einem anderen Ort installiert ist,
mindestens eine automatisierte Schaltmatrix (302), die wirksam ist, um einen Teilnehmer mit einer verfügbaren Kommunikationsvorrichtung zu verknüpfen, und im Falle eines neuen Teilnehmers (308), um die Bereitstellung des erforderlichen Dienstes in Übereinstimmung mit den Bestimmungsmitteln zu ermöglichen.

8. Eine Kommunikationsaggregationsvorrichtung (300) gemäß Anspruch 7, die weiter Folgendes umfasst:

Mittel, die wirksam sind, um eine verfügbare Kommunikationsvorrichtung, durch welche der Dienst, der für den neuen Teilnehmer erforderlich ist, bereitgestellt werden kann, aus der Vielzahl von Kommunikationsvorrichtungen in der Kommunikationsaggregationsvorrichtung (300) auszuwählen,
Prozessor, der wirksam ist, um eine maximale Distanz im Zusammenhang mit dem Dienst, der für den neuen Teilnehmer (308) erforderlich ist, festzulegen,
Mittel, die wirksam sind, um die Verfügbarkeit einer Kommunikationsvorrichtung zu bestimmen, die ausgebildet ist, um den Dienst, der für den neuen Teilnehmer (308) erforderlich ist, bereitzustellen, wobei letztere Kommunikationsvorrichtung mit einer zweiten Kommunikationsaggregationsvorrichtung verknüpft ist, die sich innerhalb der maximalen Distanz von dem neuen Teilnehmer (308) befindet.

9. Eine Kommunikationsaggregationsvorrichtung (300) gemäß Anspruch 7, wobei jede der Kommunikationsvorrichtungen ein Modem ist, das mit einer Rate arbeitet, die zur Bereitstellung eines Dienstes kompatibel ist, der von einem Teilnehmer angefordert wird, mit welchem das Modem verbunden wird.

10. Eine Kommunikationsaggregationsvorrichtung (300) gemäß Anspruch 7, weiter **dadurch gekennzeichnet, dass** die mindestens eine automatisierte Schaltmatrix (302) und die Vielzahl von Kommunikationsvorrichtungen von einer einzigen Verwaltungseinheit verwaltet werden.

11. Ein Verfahren zur Verknüpfung eines Straßenschranks (120) mit einem Zugangskommunikationssystem gemäß Anspruch 1, das Folgendes umfasst:

(i) Bereitstellung einer Eingabeschnittstelle, die mit einer Vielzahl von Teilnehmern verbunden ist, und einer Ausgabeschnittstelle, die mit einer Vermittlungsstellenseite und/oder mit einem oder mehreren anderen Straßenschränken (122, 124) verbunden ist,

(ii) Ermöglichen der Festlegung einer maximalen Distanz für jede Art von Diensten, die von jedem der Vielzahl von Teilnehmern angefordert werden,

(iii) Auswahl verfügbarer Kommunikationsvorrichtungen, die geeignet sind, Teilnehmern, denen die erforderlichen Dienste nicht von irgendeiner Kommunikationsvorrichtung bereitgestellt werden können, die in dem Straßenschrank (120) installiert ist, erforderliche Dienste bereitzustellen, wobei die Auswahl unter Anwendung eines Kriteriums vorgenommen wird, dass jede der ausgewählten Kommunikationen sich jeweils innerhalb der festgelegten maximalen Distanz von einem entsprechenden Teilnehmer befindet, dem der erforderliche Dienst zur Verfügung gestellt werden sollte,

(iv) Ermöglichen von Kommunikation zwischen Teilnehmern, denen die erforderlichen Dienste nicht von Kommunikationsvorrichtungen bereitgestellt werden, die sich in dem Straßenschrank (120) befinden, und den ausgewählten Kommunikationsvorrichtungen.

**Revendications**

1. Système d'accès pour des communications, comprenant :

une première pluralité de dispositifs de communication, chacun adapté pour communiquer avec un abonné parmi une deuxième pluralité d'abonnés associés audit système d'accès pour des communications, au moins un dispositif d'agrégation (300), comprenant au moins une matrice de commutation (302) automatisée, connectée à une troisième pluralité de dispositifs de communication sélectionnés parmi ladite première pluralité de dispositifs de communication et à une quatrième pluralité d'abonnés, sélectionnés parmi ladite deuxième pluralité d'abonnés, et dans lequel ladite matrice de commutation (302) automatisée comprend des moyens pour la connexion d'un nouvel abonné (308), par l'intermédiaire dudit au moins un dispositif d'agrégation, permettant la fourniture d'un service requis audit nouvel abonné (308), soit par utilisation d'un de ladite troisième pluralité de dispositifs de communication, soit par communication avec un dispositif de communication, installé en un emplacement différent et susceptible de fonctionner pour permettre la fourniture du service requis par ledit nouvel abonné (308) ; et

dans lequel ledit système d'accès pour des communications est en outre **caractérisé en ce que** le nombre de ladite deuxième pluralité d'abonnés est supérieur au nombre de ladite première pluralité de dispositifs de communication.

2. Système d'accès pour des communications selon la revendication 1, dans lequel ledit dispositif d'agrégation (300) est sélectionné dans le groupe composé d'un MASG, d'un DSLAM, d'une baie de communication située dans un boîtier extérieur et d'une baie de communication située dans le bureau central.

3. Système d'accès pour des communications selon la revendication 2, dans lequel ledit dispositif d'agrégation (300) est un MASG, situé en un boîtier extérieur et dans lequel ledit dispositif de communication installé en un partiellement différent est installé en un boîtier extérieur proche.

4. Système d'accès pour des communications selon la revendication 1, dans lequel chacun des services fournis par ledit réseau d'accès pour des communications se voit associé à une distance de caractérisation prédéfinie, et chacun de ladite pluralité d'abonnés peut soit être connecté par l'intermédiaire dudit dispositif d'agrégation (300) pour la fourniture de services requis par chacun de ladite troisième pluralité d'abonnés, soit être connecté par l'intermédiaire d'un deuxième dispositif d'agrégation, comprenant une cinquième pluralité de dispositifs de communication, tant que la distance, s'étendant entre chacun desdits abonnés parmi ladite troisième pluralité d'abonnés et le dispositif de communication respectif, qu'il soit installé dans ledit dispositif d'agrégation (300) ou dans ledit deuxième dispositif d'agrégation, est inférieure à la distance de caractérisation prédéfinie correspondante.

5. Système d'accès pour des communications selon la revendication 1, dans lequel ledit au moins un dispositif d'agrégation (300) et ladite troisième pluralité de dispositifs de communication sont gérés par un système de gestion.

6. Système d'accès pour des communications selon la revendication 5, dans lequel ledit système de gestion comprend une entité de gestion locale unique, fonctionnant pour gérer ledit au moins un dispositif d'agrégation (300) et ladite troisième pluralité de dispositifs de communication.

7. Dispositif d'agrégation de communication (300) adapté pour fonctionner dans un système d'accès pour des communications et comprenant :

au moins une interface, susceptible de fonctionner pour permettre une communication avec une pluralité d'abonnés ;

une pluralité de dispositifs de communication, susceptibles de fonctionner pour fournir simultanément des services requis à moins que la totalité de ladite pluralité d'abonnés ;

des moyens, susceptibles de fonctionner pour déterminer, dans le cas où un nouvel abonné doit être connecté par l'intermédiaire dudit dispositif d'agrégation de communication (300), si le service requis pour ledit nouvel abonné va être fourni par utilisation d'un de ladite pluralité de dispositifs de communication, ou par un dispositif de communication installé en un partiellement différent ;

au moins une matrice de commutation (302) automatisée, susceptible de fonctionner pour associer un abonné à un dispositif de communication disponible, et, dans le cas d'un nouvel abonné (308), susceptible de fonctionner pour permettre la fourniture du service requis selon lesdits moyens de détermination.

8. Dispositif d'agrégation de communication (300) selon la revendication 7, comprenant en outre :

des moyens, susceptibles de fonctionner pour sélectionner un dispositif de communication disponible, par l'intermédiaire duquel le service requis pour ledit nouvel abonné peut être fourni, parmi ladite pluralité de dispositifs de communication compris dans ledit dispositif d'agrégation de communication (300) ;

un processeur, susceptible de fonctionner pour établir une distance maximale, associée au service requis pour ledit nouvel abonné (308) ;

des moyens, susceptibles de fonctionner pour déterminer la disponibilité d'un dispositif de communication adapté pour fournir le service requis pour ledit nouvel abonné (308), dans lequel ledit dernier dispositif de communication est associé à un deuxième dispositif d'agrégation de communication, situé dans les limites de la distance maximale à partir dudit nouvel abonné (308).

9. Dispositif d'agrégation de communication (300) selon la revendication 7, dans lequel chacun desdits dispositifs de communication est un modem, susceptible de fonctionner à un débit compatible pour une fourniture d'un service requis par un abonné auquel ledit modem est connecté.

10. Dispositif d'agrégation de communication (300) selon la revendication 7, **caractérisé en outre en ce que** ladite au moins une matrice de commutation (302) automatisée et ladite pluralité de dispositifs de communication sont gérées par une entité de gestion unique.

11. Procédé pour associer un boîtier extérieur (120) à un système d'accès pour des communications selon la revendication 1, comprenant :

(i) la fourniture d'une interface d'entrée, connectée à une pluralité d'abonnés, et d'une interface de sortie, connectée à un côté échange et/ou à un ou plusieurs autres boîtiers extérieurs (122, 124) ;

(ii) la permission d'établir une distance maximale pour chaque type de services requis par chacun de ladite pluralité d'abonnés ;

(iii) la sélection de dispositifs de communication disponibles, convenant pour fournir des services requis à des abonnés qui ne peuvent être dotés desdits services requis par un dispositif de communication quelconque installé dans ledit boîtier extérieur (120), dans lequel la sélection est accomplie par utilisation d'un critère dictant que chacun des dispositifs de communication sélectionnés est respectivement situé dans les limites de la distance maximale établie à partir d'un abonné respectif auquel le service requis devrait être fourni ;

(iv) la permission d'établissement de communications, entre des abonnés, qui ne sont pas dotés des services requis par des dispositifs de communication compris dans ledit boîtier extérieur (120), et les dispositifs de communication sélectionnés.

M

N

*FIG.1*

K LAYERS

UP TO
$N=\Sigma Kxn_i$
CUSTOMERS

$n_1$ CUSTOMERS ⬜➜ ⬜ $m_1$ DEVICES

$n_2$ CUSTOMERS ⬜➜ ⬜ $m_2$ DEVICES

$n_k$ CUSTOMERS ⬜➜ ⬜ $m_k$ DEVICES

UP TO
$M=\Sigma Kxm_i$
DEVICES

*FIG.2*

| ⬚ADSL COMBO CARDS | ▤SHDSL CARDS |
|---|---|
| ▧VDSL COMBO CARDS | ▨POTS CARDS |
| ⬚AUTOMATED MDF LAYER | |

*FIG.3*

POSSIBLE OVERFLOW LINES

| ⬚ADSL COMBO CARDS | ▤SHDSL CARDS |
|---|---|
| ▧VDSL COMBO CARDS | ▨POTS CARDS |
| ⬚AUTOMATED MDF LAYER | |

*FIG.4*

FIG.5

FIG.6

Legend:
- DEVICE IN STREET CABINET
- OVERFLOW TO NEARBY ARCO
- OVERFLOW TO THE CO
- CUSTOMERS' LINES

FIG. 7

15 CARDS WITH UP TO 15
TYPES OF EQUIPMENT
(360 UNITS FOR 24 UNITS/CARD)
UP TO 2 GE I/F's

2xGE

312
USERS

48
OVERFLOW
LINES

48
OVERFLOW
LINES

*FIG.8*

15 CARDS WITH
UP TO 15 TYPES
OF EQUIPMENT
(360 UNITS FOR
24 UNITS/CARD)

312
USERS

15 CARDS WITH
UP TO 15 TYPES
OF EQUIPMENT
(360 UNITS FOR
24 UNITS/CARD)

312
USERS

30 CARDS WITH
UP TO 30 TYPES
OF EQUIPMENT
(720 UNITS FOR
24 UNITS/CARD)

624
USERS

*FIG.9*

*FIG.10A*

*FIG.10B*

OVERFLOW INPUTS

B

B

B

B

OVERFLOW OUTPUTS

*FIG.10C*

OVERFLOW INPUTS

B

R
R
R
R

OVERFLOW OUTPUTS

CONNECTIVITY TOPOLOGY AND SWITCHING ALGORITHM

*FIG.10D*

FIG.11

FIG.12

FIG.13

ADSL~2000m

VDSL~500m

POTS~3000m

**FIG.14**

150

**FIG.15**

```
                              ┌─────────┐ ─200
                              │RECEIVING│
                              │ SYS[M]  │
                              └────┬────┘
                                   │
                                   ▼                    ─210
    ┌──────────────────────────────────────────────────────────────┐
    │ SYSTEM_DISTANCE=SYSTEM_DISTANCE+MEASURED  DISTANCE            │
    └──────────────────────────┬───────────────────────────────────┘
                               │        ─220
                               ▼
                         ┌──────────┐
                         │RECEIVING │
                         │ SERV[N]  │
                         └────┬─────┘
                              │
                              ▼              ─230
                             ╱ ╲
            ─250       NO   ╱     ╲    YES        ─240
    ┌───────┐  ◄─────────  ╱ TOTAL DISTANCE> ╲ ──────►  ┌─────────┐
    │ STORE │             ╱ HORIZON DISTANCE   ╲        │ DISCARD │
    └───────┘             ╲   [SERV[N]]        ╱        └─────────┘
                           ╲      ?          ╱
                            ╲              ╱
                             ╲          ╱
```

*FIG.16*

FIG.17

FIG.18

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 02073889 A